# EUROPÄISCHE PATENTSCHRIFT

(11) **EP 2 146 567 B1**
(45) Veröffentlichungstag und Bekanntmachung des Hinweises auf die Patenterteilung: **22.10.2014**
(21) Anmeldenummer: 08750196.1
(22) Anmeldetag: 08.05.2008
(51) Int. Cl.: A01J 5/04

(54) **MILCHSCHLAUCH FÜR EINE MELKEINRICHTUNG**
MILK TUBE FOR A MILKING UNIT
TUYAU À LAIT POUR UN DISPOSITIF DE TRAITE

(30) Priorität: 11.05.2007 DE 102007022802
(43) Veröffentlichungstag der Anmeldung: 27.01.2010
(73) Patentinhaber: GEA WestfaliaSurge GmbH, 59199 Bönen (DE)
(72) Erfinder: AUBURGER, Markus, 59558 Lippstadt (DE); FRENSER, Reinhard, 33378 Rheda-Wiedenbrück (DE)
(74) Vertreter: Neumann, Ditmar
(86) Internationale Anmeldenummer: PCT/EP2008/055702
(87) Internationale Veröffentlichungsnummer: WO 2008/138862

(56) Entgegenhaltungen:
- WO-A-00/69252
- WO-A-01/84913
- WO-A-03/069981
- WO-A-2006/004761
- AT-B- 251 960
- US-A- 4 869 205

## Beschreibung

Die Erfindung betrifft einen Milchschlauch für eine Melkeinrichtung mit zwei gegenüberliegenden Endbereichen und einem Zwischenbereich. Des Weiteren betrifft die Erfindung ein Melkzeug mit Melkschläuchen, die zusammen mit Zitzengummis in einer Mehrzahl von Melkbechern angeordnet sind. Die Erfindung findet Anwendung in der Milchwirtschaft und insbesondere in der Milchgewmnung.

Zum Melken von Milch abgebenden Tieren werden Melksysteme eingesetzt, die unterschiedliche Ausgestaltungen haben können. Der Melkvorgang als solcher wird mittels Melkbechern durchgeführt, die an die Zitzen des Tieres angebracht werden. Ein Melkbecher weist ein Zitzengummi auf, welches entsprechend einer Pulsatorfrequenz mit Unterdruck und Atmosphärendruck beaufschlagt wird. Hierzu wird der Melkbecher mit einem Pulsatorschlauch verbunden und die ermolkene Milch wird aus den Melkbechern über einen Milchschlauch abgeführt.

Es sind Melksysteme bekannt, bei denen jeder Milchschlauch mit einem Milchsammelstück verbunden ist. Hierzu weist das Milchsammelstück Stutzen auf, über die jeweils ein Milchschlauch gestülpt wird. Jeder der Anschlussstutzen weist ein schräg angeschnittenes Ende auf, welches das Aufstecken erleichtert. Der Milchschlauch wird an dem schräg abgeschnittenen Ende abgeklemmt, wenn der Zitzenbecher frei von dem Milchsammelstück herabhängt. Eine solche Ausbildung eines Melkzeuges ist beispielsweise aus der DE 34 29 428 A1 bekannt.

AT 251 960 B beschreibt einen druck- und vakuumbeständigen Anschlussschlauch für Melkmaschinen. Mindestens an einem Ende des Anschlussschlauchs ist dieser durch Anschweißen verdichtet. Der Endbereich des Anschlussschlauchs weist eine oder mehrere ringförmige, federnde Einlagern auf. Hierdurch wird der Schlauch durch einfaches Aufschieben anschließbar. Der in der Druckschrift AT 2 51 960 B beschriebene Schlauch wird auf ein Anschlussstück aufgeschoben.

Durch die WO 0184913 A1 ist ein Milchschlauch bekannt, der zwei gegenüberliegende Endbereiche und einen Zwischenbereich aufweist. Die Bereiche sind einteilig miteinander verbunden. Der Zwischenbereich ist aus einem weichen Werkstoff gefertigt. Der Milchschlauch kann Versteifungen aufweisen, die durch eine Herstellung des Schlauchs mit unterschiedliche Materialien oder Materialmischungen erreichbar ist. Der in der Druckschrift WO 0184913 A1 beschriebene Milchschlauch wird auf einen Auslassstutzen des Melkbechers geschoben. Das andere Ende des Milchschlauchs wird über einen Anschlussstutzen des Milchsammelstücks geschoben.

Aus der WO 00/69252 A1 ist ein Milchschlauch bekannt, der zwei Endbereiche und einen zwischen den beiden Endbereichen liegenden Zwischenbereich aufweist. Der Zwischenbereich weist eine höhere Flexibilität auf als die beiden Endbereiche. Die Endbereiche werden auf einen Anschlussstützen, der mit dem Zitzengummi verbunden ist, geschoben. Das andere Ende des Milchschlauchs wird über einen Anschlussstutzen eines Mehrwegeventils geschoben. Die Innenmantelflächen der Endbereiche des Milchschlauchs sind mit den Stutzen verbunden.

Dadurch, dass der Milchschlauch wechselnden Biegebelastungen an dem schräg abgeschnittenen Ende des Milchstutzens ausgesetzt wird, unterliegt der Schlauch einer schnellen Alterung und muß häufiger getauscht werden. Ein wesentliches Problem ist auch, dass es zu Beschädigungen der kurzen Milchschläuche durch schlagartige Belastungen am schräg abgeschnittenen Ende des Stutzens kommen kann.

Der Milchschlauch haftet auf dem Stutzen durch Haftreibung. Wird der Milchschlauch auf fettbehaftete oder verschmutzte Oberflächen aufgeschoben, so reduziert sich hier die Haftung. Es besteht die Gefahr, dass beim Melken der Milchschlauch vom Stutzen abrutscht. Ein einmal beim Melken abgerutschter Milchschlauch ist auf dem Stutzen kaum mehr funktionssicher zu montieren. Die Haftung ist im wesentlichen durch die Materialpaarung Stutzen/Milchschlauch bestimmt, so dass die Wahlfreiheit der Materialien eingeschränkt ist.

Ein anderes und nicht weniger erhebliches Problem ergibt sich bei der Ausgestaltung der Schlauchverbindung dadurch, dass eine vollständige Reinigung lediglich mit einem erheblichen Aufwand erzielbar ist. Es besteht hierbei nämlich die Gefahr, dass eine unvollständige Reinigung erfolgt, da strömungstechnische Totgebiete innerhalb des Milchschlauches entstehen, so dass zwar Verschmutzungen durch eine Reinigung möglicherweise gelöst werden, diese jedoch nicht mehr aus dem Milchschlauch ausgetragen werden können.

Weiterhin ist bekannt, dass durch den Stutzen Vakuumschwankungen bewirkt werden können, weil sich durch das Biegen des Schlauches dessen Querschnitt verändert. Dies führt zu ungleichmäßigen Melkvorgängen.

Als Ergebnis ist damit festzustellen, dass die im Stand der Technik bekannten Systeme entweder einer verstärkten Abnutzung unterworfen sind und deshalb in regelmäßigen Abständen auszutauschen sind oder eine sehr gründliche Reinigung erforderlich ist, was mit einer Demontage des Systems verbunden ist.

Hiervon ausgehend liegt der vorliegenden Erfindung die Aufgabe zugrunde, einen Milchschlauchs zu schaffen, welcher eine besonders einfache Montage bei gleichzeitig möglichst geringem vorrichtungstechnischem Aufwand ermöglicht.

Diese Aufgabe wird mit einem Milchschlauch gemäß den Merkmalen des Patentanspruchs 1 sowie einem Melkzeug gemäß dem Patentanspruch 10. Weitere vorteilhafte Ausgestaltungen der Erfindung sind in den abhängig formulierten Patentansprüchen angegeben. Es ist darauf hinzuweisen, dass die in den Unteransprüchen einzeln aufgeführten Merkmale in beliebiger, technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausführungsbeispiele der Erfindung dargestellt werden.

Zur Lösung der Aufgabe ist der eingangs genannte Milchschlauch für eine Melkeinrichtung mit zwei gegenüberliegenden Endbereichen und einem Zwischenbereich ausgebildet, wobei alle Bereiche einteilig miteinander verbunden sind und der Zwischenbereich aus einem weichen Werkstoff gefertigt ist. Weiterhin ist zumindest ein Endbereich aus wenigstens einem harten Werkstoff gefertigt.

Ein weicher Werkstoff kann dabei beispielsweise ein elastisch verformbarer Werkstoff wie Gummi, TPE oder Silikone sein. Hierzu können insbesondere auch solche elastischen Komponenten verwendet werden, welche eine lebensmitteltechnische Zulassung zum Einsatz in Melkeinrichtungen besitzen.

Unter einem harten Werkstoff wird im Rahmen der vorliegenden Erfindung insbesondere ein nichtelastischer Werkstoff verstanden. Dies kann beispielsweise ein metallischer Werkstoff sein oder aber auch ein unter üblichen Raumtemperaturen fester Kunststoff. Dies sind insbesondere feste Thermoplaste (TP). Beispiele für derartige Thermoplaste sind Polyethylen (PE), Polystyrol (PS), Polyvinylchlorid (PVC) und Polyamid (PA).

Durch die Verwendung von unterschiedlichen Werkstoffen an einem Milchschlauch wird es gemäß der vorliegenden Erfindung möglich, diesen so zu gestalten, dass er einerseits besonders leicht mit einem Melkbecher oder am anderen Ende mit einem Milchsammeistück zu verbinden ist. Gleichzeitig wird durch die Ausbildung des Zwischenbereichs aus dem weichen Werkstoff erreicht, dass der Milchschlauch nach wie vor sehr beweglich ist und den Einsatz hierdurch erleichtert. Mit Hilfe eines Endbereichs, der aus einem festen Werkstoff gefertigt ist, können die Endbereiche der Milchschläuche so gestaltet werden, dass sie an die zu verbindenden Bereiche der Melkeinrichtung angeschlossen werden können. Beide Endbereiche sind aus dem harten Werkstoff gefertigt. In diesem Fall ist es möglich, mit einem erfindungsgemäßen Milchschlauch eine Verbindung, beispielsweise zwischen einem Milchsammelbehälter und einem Melkbecher zu schaffen, wobei der Milchschlauch an beiden Enden speziell ausgebildete Endbereiche aufweist, welche besonders zum Anschluss an die jeweiligen Milchsammelbehälter und Melkbecher der Melkeinrichtung ausgebildet sind.

Dazu ist bei der Erfindung vorgesehen, dass der wenigstens eine Endbereich Verbindungsmittel zum Anschluss an einen Melkbecher oder Milchsammelbehälter aufweist. Wie bereits zuvor erläutert, handelt es sich hierbei um eines der wesentlichen Einsatzgebiete für einen erfindungsgemäßen Milchschlauch. Die Verbindung von Melkbecher und Milchsammelbehälter stellt eine besonders stark belastete Zone innerhalb der Melkeinrichtung dar, weshalb die an dieser Stelle eingesetzten Milchschläuche relativ häufig auszutauschen und/oder zu reinigen sind. Mit Hilfe der erfindungsgemäßen Verbindungsmittel, welche durch den harten Werkstoff in den Endbereichen ausgebildet sind, kann der erfindungsgemäße Milchschlauch jedoch nun besonders einfach, zeitsparend und bedienerfreundlich montiert oder getauscht werden. Hierdurch wird zum Einen die Wartung der Anlage im laufenden Betrieb spürbar erleichtert. Andererseits können die erfindungsgemäßen Milchschläuche aber auch häufiger gewechselt und beispielsweise einer Reinigung zugeführt werden, was im Vergleich zu bisher im Stand der Technik bekannten Milchschläuchen mit einem erheblich reduzierten Arbeitsaufwand geschehen kann.

Ganz besonders vorteilhaft ist es dabei, wenn die Verbindungsmittel zumindest teilweise formschlüssig ausgebildet sind und insbesondere Rastmittel umfassen. Hierdurch wird eine Art Steckverbindung zwischen dem Milchschlauch und den angrenzenden Komponenten der Melkeinrichtung geschaffen. Diese kann einseitig oder beidseitig des Milchschlauchs ausgebildet sein. Insbesondere vorteilhaft ist im Rahmen der vorliegenden Erfindung eine Ausbildung des Verbindungsmittels als Rastverbindung, welche den Milchschlauch an einem Melkbecher und/oder Milchsammelbehälter befestigt. Ein Austausch oder eine Entnahme des Milchschlauchs erfordert lediglich noch das Lösen des Rastmittels und der Milchschlauch kann entnommen werden.

Nach der Erfindung ist vorgesehen, dass der Endbereich des Milchschlauchs Befestigungsmittel zum Anschluss eines Zitzengummis aufweist. Mit Hilfe eines solchen Befestigungsmittels kann der Milchschlauch mit einem Zitzengummi zunächst verbunden und danach als einteilige Baugruppe in der Melkeinrichtung montiert werden. Bei der Montage oder Wartung von Melkeinrichtungen ergibt sich hieraus ein gravierender Vorteil durch die stark vereinfachte Montage. Der Milchschlauch kann nämlich bei erfindungsgemäßer Ausgestaltung zunächst mit dem Zitzengummi über das Befestigungsmittel verbunden werden. Erst danach wird das lose Ende des Milchschlauches, etwa durch den Melkbecher in Milchflußrichtung durchgeführt, und das Zitzengummi, welches am gegenüberliegenden Endbereich des Milchschlauches angebunden ist, wird zusammen mit dem Milchschlauch in den Melkbecher hineingezogen. Ein umständliches Einfädeln der einzelnen Bauteile, wie es bei mehrteiligen Milchschläuchen und Zitzengummis bisher im Stand der Technik erforderlich war, entfällt damit. Die vorliegende Erfindung kombiniert damit die Vorteile von einteiligen Milchschläuchen mit angeformtem Zitzengummi mit den Vorteilen von mehrteiligen Milchschläuchen, bei denen Zitzengummis und kurze Milchschläuche bislang getrennt zu montieren waren.

Für eine fehlerfreie Montage ist es zudem vorteilhaft, wenn Positioniermittel zum Positionieren von Zitzengummi und Milchschlauch zueinander und/oder zum Melkbecher vorgesehen sind. Zitzengummis, welche etwa tordiert in einem Melkbecher angebracht werden, haben sich in der Vergangenheit des Öfteren als mögliche Fehlerquelle erwiesen. Aus diesem Grunde sieht die Erfindung Positioniermittel vor, welche dafür sorgen, dass das Zitzengummi die korrekte Relativlage in Bezug auf den Melkbecher einnimmt. Hierzu können beispielsweise unter einem Kragen des Zitzengummis Stege vorgesehen sein, welche in komplementär ausgeformte Nuten in der Außenwand des Melkbechers eingesteckt werden, und so eine Verdrehsicherung um die Längsachse des Melkbechers bilden. Eine ähnliche Verdrehsicherung kann selbstverständlich auch zwischen dem Milchschlauch und dem Melkbecher vorgesehen sein. Alternativ ist es aber auch möglich, alleine oder zusätzlich zu anderen Positioniermitteln ein Positioniermittel zwischen Zitzengummi und Milchschlauch vorzusehen, so dass diese nur in einer bestimmten Stellung miteinander verbindbar sind. Durch die Verwendung von Positioniermitteln an den drei Kontaktstellen, d. h. zwischen Zitzengummi und Melkbecher, zwischen Melkbecher und Milchschlauch sowie zwischen Milchschlauch und Zitzengummi, ist es möglich eine korrekte Montage der Bauteile sicherzustellen. Dabei kann im einfachsten Fall ein Positioniermittel nur an einer der Kontaktstellen vorgesehen sein.
Für eine einfache und zuverlässige Ausgestaltung des erfindungsgemäßen Milchschlauches ist der wenigstens eine harte Werkstoff an einem Außenumfang des Milchschlauchs angeordnet. Hierdurch kann beispielsweise an der Innenseite des Milchschlauchs die Leitung der Milch über nur eine einzige Art von Werkstoff erfolgen. Das heißt, die Milch kommt dabei im Fluss durch den Milchschlauch nur mit diesem einen Werkstoff in Kontakt, was aus lebensmitteltechnischer Sicht eine besondere Vereinfachung darstellt. Weiterhin kann durch die Verlagerung der Grenzflächen zwischen dem harten und weichen Werkstoff an den Außenseiten des Milchschlauchs eine höhere Widerstandsfähigkeit bezüglich Undichtigkeiten erreicht werden. Keine der Grenzflächen zwischen den beiden Werkstoffen setzt sich nämlich in diesem Fall von der Außenseite bis an die Innenseite des Milchschlauches fort. Insbesondere wenn der harte Werkstoff einen hülsenförmigen Endbereich bildet, welcher den weichen Werkstoff umschließt, kann dieser gleichzeitig als Verbindungs- bzw. Befestigungsmittel dienen und den aus dem weichen Werkstoff bestehenden Zwischenbereich zusätzlich schützend umschließen.

Vorteihafterweise ist der weiche Werkstoff ein Elastomer, wie etwa ein Flüssigsilikon (LSR), ein thermoplastisches Elastomer (TPE), ein Gummi oder ein festes Silikon (HTV). Diese Werkstoffe sind neben anderen elastischen und lebensmitteltechnisch zugelassenen Werkstoffen relativ preiswert verfügbar, technisch sehr gut zu verarbeiten und in ihren Eigenschaften bekannt.

Dem gegenüber ist der harte Werkstoff vorzugsweise ein Thermoplast, wie beispielsweise Polyethylen, Polystyrol, Polyvinylchlorid oder Polyamid. Solche thermoplastischen Kunststoffe sind bei Raumtemperatur fest und lassen sich gleichzeitig mittels bekannter Verfahren zum Herstellen von Werkstücken aus mehreren Komponenten verarbeiten. Es kann sich dabei zum Beispiel um ein Zwei-Komponenten-Spritzgießverfahren handeln.

Die Ausführungsform der Erfindung sieht vor, dass die Verbindungsmittel und die Befestigungsmittel am Außenumfang des Milchschlauchs angeordnet sind. Auch bei dieser Ausführungsform ist es möglich, den aus einem weichen Werkstoff gefertigten Zwischenbereich über die gesamte Schlauchlänge auszubilden, wobei auch hierbei die Milch nur mit einem einzigen Werkstoff in Kontakt tritt. Die Kombination von Verbindungsmitteln und Befestigungsmitteln am Außenumfang des Milchschlauches erlaubt es dem Milchschlauch einerseits mit einer der Komponenten der Melkeinrichtung, wie beispielsweise dem Milchsammelbehälter oder dem Melkbecher zu verbinden und andererseits über ein Befestigungsmittel das Zitzengummi mit dem Milchschlauch zu verbinden, so dass beide zusammen beispielsweise in den Melkbecher eingeführt und unter Aktivierung der Verbindungsmittel dort sicher montierbar sind.

Eine weitere vorteilhafte Ausführungsform der Erfindung sieht vor, dass wenigstens ein Bereich abgewinkelt ist. Dies ist insbesondere an der vom Melkbecher entfernt liegenden Seite des Milchschlauchs vorteilhaft, wobei diese Seite in der Regel in einen Milchsammelbehälter mündet. Aufgrund der Anatomie der Tiere werden die Milchschläuche aus unterschiedlichen Richtungen kommend an einem Milchsammelbehälter zusammengeführt. Aus diesem Grunde treffen sie unter einem gegenüber der vertikalen Richtung geneigten Winkel auf den Milchsammelbehälter. Genau dieser Auftreffwinkel kann mittels eines abgewinkelten Endbereiches nachgebildet werden, wodurch der Milchschlauch an dieser Stelle keine weitere Verformung ausführen muß und geschont wird. Darüber hinaus werden in die Zitze im wesentlichen keine Drehmomente eingeleitet. Weiterhin ist es vorteilhaft, wenn der Milchschlauch um eine annähernd vertikale Drehachse, relativ zum Milchsammelbehälter drehbar gelagert ist. So sich kann der Milchschlauch selbsttätig an unterschiedliche Zitzenstellungen anpassen oder durch einfaches manuelles Verdrehen angepasst werden.

Für einen einwandfreien Betrieb einer Melkeinrichtung ist es notwendig, den Milchschlauch zu belüften. Aus diesem Grunde ist vorzugsweise vorgesehen, dass wenigstens ein Endbereich eine Belüftungseinrichtung aufweist, die vorzugsweise Luft in Milchflußrichtung einleitet und im Bereich des Melkbechers angeordnet ist. Bei einer Ausführung des Milchschlauches aus zwei unterschiedlichen Werkstoffen ist es möglich, die Belüftungseinrichtung insbesondere in dem harten Werkstoff auszubilden. Dazu bietet sich insbesondere der aus dem harten Werkstoff gefertigte Endbereich des Milchschlauches an. Im Gegensatz zu bekannten Belüftungseinrichtungen von Milchschläuchen können so separate Bauteile entfallen und die Belüftungseinrichtung ist kostengünstiger darstellbar. Die Belüftungseinrichtung kann dabei bei Bedarf an allen Bereichen des Milchschlauches angeordnet sein. Besonders bevorzugt werden aber Ausführungsformen, bei denen die Belüftungseinrichtung im Bereich des Melkbechers angeordnet ist. Insbesondere solche Belüftungseinrichtungen werden bevorzugt, welche Luft in einer Richtung zuführen, welche im Wesentlichen mit der Flußrichtung der gemolkenen Milch übereinstimmt.

Bevorzugt wird das Verbindungsmittel gemäß der vorliegenden Erfindung als Paarung zweier harter Werkstoffe ausgebildet. Auf diese Weise kann beispielsweise der aus dem harten Werkstoff gefertigte Endbereich des Milchschlauches, über eine Rastverbindung welche das Verbindungsmittel darstellt, mit einem aus Metall gefertigten Melkbecher verbunden werden.

An anderer Stelle ist es vorteilhaft, das Befestigungsmittel als Paarung eines harten und eines weichen Werkstoffes auszubilden. Durch diese Hart-Weich-Paarung von Werkstoffen ist es möglich, eine besonders gut dichtende Verbindung zwischen dem aus dem harten Werkstoff gefertigten Endbereich des Milchschlauches und einem aus einem weichen Werkstoff gefertigten Zitzengummi zu erhalten.

Ganz besonders vorteilhaft ist es im Rahmen der vorliegenden Erfindung, wenn die Verbindungsmittel und die Befestigungsmittel nebeneinander an einem gemeinsamen Abschnitt des Milchschlauchs angeordnet sind. Hierdurch ist es möglich, dass sich Verbindungsmittel und Befestigungsmittel eine einzige Anlagefläche am Außenumfang des Milchschlauches, welche aus dem harten Werkstoff gefertigt ist, teilen. Beide Befestigungsmittel schaffen also eine Anlage an diese Außenumfangsfläche. Insbesondere wenn der aus dem harten Werkstoff gefertigte Endbereich eine Aufweitung in radialer Richtung zu dem Schlauchende hin aufweist, ist es möglich, mit dieser Aufweitung ein darauf befestigtes Zitzengummi in einen Melkbecher hineinzuziehen und anschließend den Zitzengummi gegen den Boden des Melkbechers zu drücken. Die so erreichte Stellung wird dann mittels der vorgesehenen Rastmittel beibehalten, so dass sich durch einfaches Einziehen des Milchschlauchs bis zum Anschlag, d. h. dem Eingreifen der Rastmittel, der Melkbecher mit dem darin montierten Zitzengummi nebst angeschlossenem Milchschlauch sehr einfach montieren läßt.

Das erfindungsgemäße Melkzeug, auf welches sich die Erfindung ferner bezieht, weist eine Mehrzahl von Melkbechern auf, in denen Zitzengummis angeordnet sind. Die Zitzengummis sind über Milchschläuche an einen Milchsammelbehälter angeschlossen, wobei die Milchschläuche nach Art der vorliegenden Erfindung ausgebildet sind. Ein solches erfindungsgemäßes Melkzeug kann, wie bereits zuvor erwähnt, besonders einfach hergestellt und in Stand gehalten werden. Mit den erfindungsgemäßen Milchschläuchen ist das Austauschen von Milchschläuchen und Zitzengummis wesentlich einfacher und schneller geworden. Zudem können Milchschläuche auch zu Reinigungszwecken zusammen mit den Zitzengummis in einfacher Weise entnommen und wieder montiert werden. Dies erfordert weder einen hohen Kraft- noch einen besonders hohen Zeitaufwand.

Somit ist ein erheblicher Vorteil im Hinblick auf den Wartungsaufwand und die mögliche erreichbar Hygiene erzielt worden. Zudem ist es ressourcenschonend, wenn ein Quasi-Monoblock aus zwei unterschiedlichen Werkstoffen geschaffen wird, der sich wie ein Monoblock verbauen lässt. So kann beispielsweise der Milchschlauch aus einem besonders langlebigen Silikon und das Zitzengummi aus einem Gummi gefertigt sein. Dabei kann das verschlissene Zitzengummi getrennt getauscht und der Milchschlauch weiterverwendet werden. Demgegenüber ist es bei bisherigen Monoblock-Gestaltungen, bei denen Milchschlauch und Zitzengummi einteilig und aus einem Werkstoff gefertigt sind, erforderlich den jeweils anderen Abschnitt mit zu entsorgen, wenn ein Abschnitt verschlissen ist.

Die Fertigung eines Melkbechers umfasst nur noch zwei Schritte. Der erste Schritt besteht im Wesentlichen darin, den Milchschlauch mit dem Zitzengummi zu verbinden. Im nächsten Schritt werden dann Milchschlauch und Zitzengummi gemeinsam als eine Einheit in den Melkbecher eingeführt und vorzugsweise in Milchflußrichtung durch diesen hindurchgezogen, bis das Zitzengummi seine endgültige Lage erreicht hat. In diesem Zustand werden dann Milchschlauch und Zitzengummi in der so erreichten Position relativ zum Melkbecher durch die Rastmittel fixiert.

Die Erfindung sowie das technische Umfeld werden nachfolgend anhand der Figur noch näher erläutert. Es wird darauf hingewiesen, dass die Figur eine besonders bevorzugte Ausführungsvariante der Erfindung zeigt, auf die sie jedoch nicht beschränkt ist. In der Zeichnung zeigt:

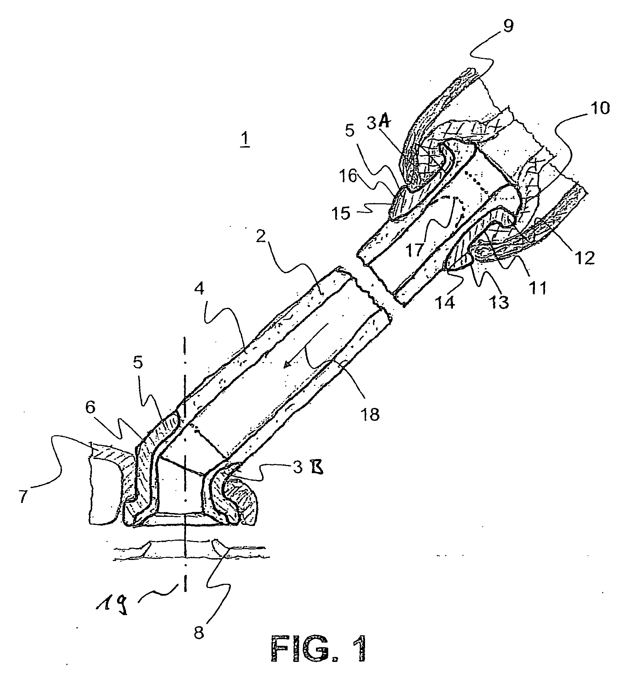

Fig. 1: einen axialen Längsschnitt durch einen erfindungsgemäßen Milchschlauch.

In Fig. 1 ist ein axialer Längsschnitt durch einen erfindungsgemäßen Milchschlauch 1 dargestellt. Der Milchschlauch 1 weist einen Zwischenbereich 2 und zwei Endbereiche 3A, 3B auf. Der Zwischenbereich 2 ist aus einem weichen Werkstoff 4 gefertigt. Dem gegenüber sind die beiden Endbereiche 3A, 3B aus einem harten Werkstoff 5 gefertigt. Die vorliegend dargestellten Endbereiche 3A, 3B befinden sich ausschließlich am Außenumfang des Milchschlauchs 1. Das heißt Milch, welche in einer Milchflußrichtung 18 durch den Milchschlauch 1 hindurch tritt, kommt über die gesamte Länge des Milchschlauchs 1 lediglich mit dem weichen Werkstoff 4 in Kontakt. Im linken unteren Endbereich 3A, 3B ist ein abgewinkelter Bereich 6 erkennbar. Der abgewinkelte Bereich 6 mündet in einen Deckel 7 eines nicht weiter dargestellten Milchsammelbehälters 8. Im Bereich des oberen Endbereichs 3A, 3B ist teilweise ein Melkbecher 9 sowie ebenfalls teilweise ein Zitzengummi 10 dargestellt.

Die Montage des Milchschlauchs 1 erfolgt, in dem in einem ersten Schritt das Zitzengummi 10 über den harten Werkstoff 5 des oberen Endbereichs 3A geführt und auf einer Befestigungsfläche 11 zur Anlage gebracht wird. Ein versehentliches Herabrutschen des Zitzengummis 10 vom Milchschlauch 1 wird durch einen Kragen 12 verhindert, der sich an einem Ende des Milchschlauchs 1 befindet und in radialer Richtung nach außen aufgeweitet ist. In der dazu entgegengesetzten Richtung weist der Endbereich 3A einen zweiten Kragen 13 auf, der ein Herabrutschen des Zitzengummis 10 in die entgegengesetzte Richtung verhindert. Der zweite Kragen 13 ist bei der vorliegend gezeigten Ausführungsform gleichzeitig als Anlagefläche 14 eines Rastmittels 15 ausgebildet. Die Anlagefläche 14 dient im zusammengebauten Zustand zusätzlich zur formschlüssigen Befestigung des Milchschlauches innerhalb des Melkbechers 9. Der obere Endbereich 3A weist dazu zusätzlich Einführschrägen 16 auf, die das Einstecken des zusammengebauten Milchschlauchs zusammen mit dem Zitzengummi 10 in den Melkbecher 9 erleichtern. Die durch die Anlagefläche 14 ausgebildeten Rastmittel 15 werden beim Einstecken in den Melkbecher 9 in radial nach innen weisender Richtung zusammengedrückt, so dass der Endbereich 3A durch die kleiner ausgelegte Öffnung im Melkbecher 9 hindurch treten kann.

Um diesen Vorgang zu erleichtern, sind partielle Ausnehmungen 17 am Endbereich 3A vorgesehen, so dass sich die Rastmittel 15 während des Zusammenbauvorganges relativ leicht verformen lassen. Durch den Endbereich 3A werden bei der vorliegend dargestellten Auslegung des Milchschlauchs 1 das Zitzengummi 10, der Melkbecher 9 und der Milchschlauch 1 gegeneinander gepresst, so dass ein sicherer Halt und gleichzeitig eine gute Dichtigkeit erreicht wird.

Eine Demontage kann dann durch einfaches Lösen der Rastmittel 15 geschehen. Nach dem Lösen der Rastmittel 15 kann der Milchschlauch zusammen mit dem Zitzengummi einfach aus dem Melkbecher 9 entnommen und ausgetauscht werden. Bei Bedarf ist es auch möglich, nur eine einzelne Komponente, wie beispielsweise den Milchschlauch 1 oder das Zitzengummi 10, getrennt auszutauschen, um danach die Montage in umgekehrter Richtung vorzunehmen. Bei der dargestellten Ausführungsform teilen sich Zitzengummi 10 und Melkbecher 9 eine gemeinsame Befestigungsfläche 11 an der Außenseite des oberen Endbereichs 3. Bei anderen alternativen Ausführungsformen können diese aber auch auf mehrere getrennte Befestigungsflächen 11 aufgeteilt werden. Dies würde zu einer Trennung von Verbindungs- und Befestigungsmitteln führen. Während hier das Verbindungsmittel zum Anschluss des Milchschlauchs an den Melkbecher aus dem Kragen 12 und dem Rastmittel 15 besteht, bilden der Kragen 12 und der Kragen 13 das Befestigungsmittel zur Befestigung des Zitzengummis 10 am Milchschlauch 1. Wie gesagt, können bei anderen Ausführungsformen bei Bedarf Befestigungs- und Verbindungsmittel getrennt voneinander angeordnet und andersartig ausgebildet sein. Um eine besonders gute Anpassung der Melkeinheit an unterschiedlichste Zitzenstellungen zu gewährleisten, ist der Milchschlauch 1 relativ zum Milchsammelbehälter 8 um eine Drehachse 19 drehbar angebunden. Neben dem abgewinkelten Bereich 6, weist der Milchschlauch 1 damit eine zweite Anpassungsmöglichkeit an anatomische bzw. räumliche Gegebenheiten auf.

Im Übrigen ist die vorliegende Erfindung nicht auf die dargestellten Ausführungsbeispiele beschränkt. Es sind vielmehr zahlreiche Abwandlungen der Erfindung im Rahmen der Patentansprüche möglich. So können beispielsweise anstelle der beschriebenen Werkstoffe zahlreiche andere harte oder weiche Werkstoffe zur Anwendung kommen oder die Gestaltung der Verbindungs- und Befestigungsmittel variiert werden.

### Bezugszeichenliste

- 1: Milchschlauch
- 2: Zwischenbereich
- 3A, 3B: Endbereich
- 4: Weicher Werkstoff
- 5: Harter Werkstoff
- 6: Abgewinkelter Bereich
- 7: Deckel
- 8: Milchsammelbehälter
- 9: Melkbecher
- 10: Zitzengummi
- 11: Befestigungsfläche
- 12: Kragen
- 13: Zweiter Kragen
- 14: Anlagefläche
- 15: Rastmittel
- 16: Einführschräge
- 17: Ausnehmung
- 18: Milchflußrichtung
- 19: Drehachse

## Patentansprüche

1. Milchschlauch (1) für eine Melkeinrichtung mit zwei gegenüberliegenden Endbereichen (3A; 3B) und einem Zwischenbereich (2), wobei alle Bereiche einteilig miteinander verbunden sind und der Zwischenbereich (2) aus einem weichen Werkstoff (4) gefertigt ist, und zumindest ein Endbereich (3A; 3B) wenigstens teilweise aus wenigstens einem harten Werkstoff (5) gefertigt ist, **dadurch gekennzeichnet,**
**dass** ein Endbereich (3A) Verbindungsmittel zum Anschluss an einen Melkbecher (9) und Befestigungsmittel zum Anschluss eines Zitzengummis (10) aufweist,
**dass** der weitere Endbereich (3B) Verbindungsmittel zum Anschluss an einen Milchsammelbehälter (8) aufweist,
**dass** der wenigstens eine harte Werkstoff an einem Außenumfang angeordnet ist und die Verbindungsmittel und die Befestigungsmittel aus dem harten Wekstoff gebildet sind.

2. Milchschlauch (1) nach Anspruch 1, wobei die Verbindungsmittel zumindest teilweise formschlüssig wirken und insbesondere Rastmittel (15) umfassen.

3. Milchschlauch (1) nach einem der vorhergehenden Ansprüche, wobei Positioniermittel zur Positionierung von Zitzengummi (10) und Milchschlauch (1) zueinander und/oder zum Melkbecher (9) vorgesehen sind.

4. Milchschlauch (1) nach einem der vorhergehenden Ansprüche, wobei der weiche Werkstoff (4) ein Elastomer ist.

5. Milchschlauch (1) nach einem der vorhergehenden Ansprüche, wobei der harte Werkstoff (5) ein Thermoplast ist.

6. Milchschlauch (1) nach einem der vorhergehenden Ansprüche, wobei wenigstens ein Endbereich (3A; 3B) abgewinkelt ist.

7. Milchschlauch (1) nach einem der vorhergehenden Ansprüche, wobei wenigstens ein Endbereich (3A; 3B) eine Belüftungseinrichtung aufweist, die vorzugsweise Luft in Milchflußrichtung (18) einleitet und im Bereich des Melkbechers angeordnet ist.

8. Milchschlauch (1) nach einem der vorhergehenden Ansprüche, wobei das Verbindungsmittel als Paarung zweier harter Werkstoffe ausgebildet ist.

9. Milchschlauch (1) nach einem der vorhergehenden Ansprüche, wobei die Verbindungsmittel und die Befestigungsmittel nebeneinander an einem gemeinsamen Abschnitt (11) des Milchschlauchs (10) angeordnet sind.

10. Melkzeug mit einer Mehrzahl von Melkbechern (9), in denen Zitzengummis (10) angeordnet sind, wobei die Zitzengummis (10) über Milchschläuche (1) an einen Milchsammelbehälter (8) angeschlossen sind, wobei die Milchschläuche (1) nach einem der vorhergehenden Ansprüche ausgebildet sind.

## Claims

1. Milk tube (1) for a milking unit, with two opposite end regions (3A; 3B) and an intermediate region (2), wherein all of the regions are connected integrally to one another, and the intermediate region (2) is manufactured from a soft material (4), and at least one end region (3A; 3B) is at least partially manufactured from at least one hard material (5), **characterized in that** one end region (3A) has connecting means for connecting to a teat cup (9) and fastening means for the connection of a teat rubber (10),
**in that** the further end region (3B) has connecting means for connecting to a milk-collecting container (8),
**in that** the at least one hard material is arranged on an outer circumference, and the connecting means and the fastening means are formed from the hard material.

2. Milk tube (1) according to Claim 1, wherein the connecting means act at least partially in a form-fitting manner and in particular comprise latching means (15).

3. Milk tube (1) according to either of the preceding claims, wherein positioning means for positioning teat rubber (10) and milk tube (1) with respect to each other and/or with respect to the teat cup (9) are provided.

4. Milk tube (1) according to one of the preceding claims, wherein the soft material (4) is an elastomer.

5. Milk tube (1) according to one of the preceding claims, wherein the hard material (5) is a thermoplastic.

6. Milk tube (1) according to one of the preceding claims, wherein at least one end region (3A; 3B) is angled.

7. Milk tube (1) according to one of the preceding claims, wherein at least one end region (3A; 3B) has a ventilation device which preferably introduces air in the milk flow direction (18) and is arranged in the region of the teat cup.

8. Milk tube (1) according to one of the preceding claims, wherein the connecting means is in the form of a pairing of two hard materials.

9. Milk tube (1) according to one of the preceding claims, wherein the connecting means and the fastening means are arranged next to one another on a common section (11) of the milk tube (10).

10. Teat cup cluster with a plurality of teat cups (9) in which teat rubbers (10) are arranged, wherein the teat rubbers (10) are connected to a milk-collecting container (8) via milk tubes (1), wherein the milk tubes (1) are designed according to one of the preceding claims.

## Revendications

1. Tuyau à lait (1) pour un dispositif de traite, comprenant deux zones d'extrémité opposées (3A ; 3B) et une zone intermédiaire (2), toutes les zones étant connectées d'une seule pièce les unes aux autres et la zone intermédiaire (2) étant fabriquée en un matériau souple (4), et au moins une zone d'extrémité (3A ; 3B) étant fabriquée au moins en partie en au moins un matériau dur (5), **caractérisé en ce**
**qu'**une zone d'extrémité (3A) présente des moyens de connexion pour le raccordement à un gobelet trayeur (9) et des moyens de fixation pour le raccordement d'un élément en caoutchouc pour trayon (10),
en ce que l'autre zone d'extrémité (3B) présente des moyens de connexion pour le raccordement à un récipient de collecte de lait (8),
en ce que l'au moins un matériau dur est disposé au niveau d'une périphérie extérieure et les moyens de connexion et les moyens de fixation sont formés en le matériau dur.

2. Tuyau à lait (1) selon la revendication 1, dans lequel les moyens de connexion agissent au moins en partie par engagement par correspondance de forme et comprennent notamment des moyens d'encliquetage (15).

3. Tuyau à lait (1) selon l'une quelconque des revendications précédentes, dans lequel des moyens de positionnement sont prévus pour le positionnement de l'élément en caoutchouc pour trayon (10) et du tuyau à lait (1) l'un par rapport à l'autre et/ou par rapport au gobelet trayeur (9).

4. Tuyau à lait (1) selon l'une quelconque des revendications précédentes, dans lequel le matériau souple (4) est un élastomère.

5. Tuyau à lait (1) selon l'une quelconque des revendications précédentes, dans lequel le matériau dur (5) est un thermoplastique.

6. Tuyau à lait (1) selon l'une quelconque des revendications précédentes, dans lequel au moins une zone d'extrémité (3A ; 3B) est coudée.

7. Tuyau à lait (1) selon l'une quelconque des revendications précédentes, dans lequel au moins une zone d'extrémité (3A ; 3B) présente un dispositif de ventilation qui introduit de préférence de l'air dans la direction de l'écoulement de lait (18) et qui est disposé dans la région du gobelet trayeur.

8. Tuyau à lait (1) selon l'une quelconque des revendications précédentes, dans lequel le moyen de connexion est réalisé sous forme d'une paire de deux matériaux durs.

9. Tuyau à lait (1) selon l'une quelconque des revendications précédentes, dans lequel les moyens de connexion et les moyens de fixation sont disposés les uns à côté des autres au niveau d'une portion commune (11) du tuyau à lait (10).

10. Outil de traite comprenant une pluralité de gobelets trayeurs (9), dans lesquels sont disposés des éléments en caoutchouc pour trayons (10), les éléments en caoutchouc pour trayons (10) étant raccordés par le biais de tuyaux à lait (1) à un récipient de collecte de lait (8), les tuyaux à lait (1) étant réalisés selon l'une quelconque des revendications précédentes.
